# EUROPEAN PATENT SPECIFICATION

(11) **EP 4 369 511 B1**
(45) Date of publication and mention of the grant of the patent: **04.11.2026**
(21) Application number: 22886543.2
(22) Date of filing: 22.09.2022
(51) Int. Cl.: H01M 10/48, H01M 50/569, H01M 50/284, H01M 50/507, H01G 11/82, H01M 50/204, H01M 50/209, H01M 50/249, H01G 11/78, H01G 11/18, B23P 11/00

(54) **POWER STORAGE DEVICE**
ENERGIESPEICHERVORRICHTUNG
DISPOSITIF DE STOCKAGE D'ÉNERGIE

(30) Priority: 27.10.2021 JP 2021175151
(43) Date of publication of application: 15.05.2024
(73) Proprietor: GS Yuasa International Ltd., Kisshoin, Minami-ku, Kyoto-shi, Kyoto 601-8520 (JP)
(72) Inventor: KITAMURA, Naoyuki, Kyoto-shi, Kyoto 601-8520 (JP)
(74) Representative: Isarpatent
(86) International application number: PCT/JP2022/035436
(87) International publication number: WO 2023/074210

(56) References cited:
- WO-A1-2021/176919
- JP-A- 2003 329 697
- JP-A- H09 218 217

## Description

### TECHNICAL FIELD

The present invention relates to an energy storage apparatus that includes a sensor mounted on an energy storage device.

### BACKGROUND ART

Conventionally, there has been known an energy storage apparatus that includes energy storage devices, an outer case which accommodates the energy storage devices, and a holding member that is accommodated in the outer case and holds bus bars connected to the energy storage devices. Such an energy storage apparatus includes sensors (thermistors) for detecting states of the energy storage devices. The sensors are fixed to the energy storage devices in a state where the sensor is pressed against the energy storage device by the holding member. (see, for example, patent document 1).

Document WO 2021/176919 A1 discloses an energy storage apparatus according to the preamble of claims 1 and 8.

### PRIOR ART DOCUMENT

### PATENT DOCUMENT

Patent Document 1: JP-A-2017-152161

### SUMMARY OF THE INVENTION

### PROBLEMS TO BE SOLVED BY THE INVENTION

In such an energy storage apparatus, there may be a case where the holding member holds the sensor in a state of where the sensor is spaced apart from the energy storage device due to warping or tolerance of the holding member itself. In such a case, a gap is formed between a detection surface of the sensor and the energy storage device. Accordingly, there is a concern that the sensor cannot accurately detect the state of the energy storage device.

An object of the present invention is to provide an energy storage apparatus where a sensor can detect a state of an energy storage device in a more stable manner.

### MEANS FOR SOLVING THE PROBLEMS

According to one aspect of the present invention, there is provided an energy storage apparatus that includes: an energy storage device; a sensor mounted on the energy storage device; and a holding member that holds the sensor in a state where a detection surface of the sensor faces the energy storage device, wherein the sensor includes a protruding portion that protrudes laterally, the holding member includes: an oppositely facing surface that faces the protruding portion; and a fixing portion that is provided to the oppositely facing surface and fixes the protruding portion in a state where the fixing portion penetrates the protruding portion, an a gap is formed between the protruding portion and the oppositely facing surface.

According to another aspect of the present invention, there is provided an energy storage apparatus that includes: an energy storage device; a bus bar electrically connected to the energy storage device; a sensor mounted on the bus bar; and a holding member that holds the sensor in a state where a detection surface of the sensor faces the bus bar, wherein the sensor includes a protruding portion that protrudes laterally, the holding member includes: an oppositely facing surface that faces the protruding portion; and a fixing portion that is provided to the oppositely facing surface and fixes the protruding portion in a state where the fixing portion penetrates the protruding portion, and a gap is formed between the protruding portion and the oppositely facing surface.

Preferred embodiments are provided by the dependent claims.

### ADVANTAGES OF THE INVENTION

According to the present invention, it is possible to provide an energy storage apparatus where a sensor can stably detect a state of an energy storage device.

### BRIEF DESCRIPTION OF THE DRAWINGS

Fig. 1 is a perspective view illustrating an appearance of an energy storage apparatus according to an embodiment 1.
Fig. 2 is an exploded perspective view illustrating respective constituent elements in a state where the energy storage apparatus of the embodiment 1 is disassembled.
Fig. 3 is a perspective view illustrating an appearance of an energy storage device according to the embodiment 1.
Fig. 4 is a perspective view illustrating a bus bar frame according to the embodiment 1.
Fig. 5 is a cross-sectional view illustrating an assembled structure formed of the bus bar frame and a sensor according to the embodiment 1.
Fig. 6 is a cross-sectional view illustrating a state before the sensor is assembled to the bus bar frame according to the embodiment 1.
Fig. 7 is a cross-sectional view illustrating a state where the sensor is in the process of being assembled to the bus bar frame according to the embodiment 1.
Fig. 8 is a cross-sectional view illustrating an assembled structure formed of a bus bar frame and a sensor according to a modification 1.
Fig. 9 is a cross-sectional view illustrating an assembled structure formed of a bus bar frame and a sensor according to a modification 2.
Fig. 10 is a cross-sectional view illustrating an assembled structure formed of a bus bar frame and a sensor according to a modification 3.
Fig. 11 is a cross-sectional view illustrating an assembled structure formed of a bus bar frame and a sensor according to a modification 4.
Fig. 12 is a cross-sectional view illustrating an assembled structure formed of a bus bar frame and a sensor according to an embodiment 2.

### MODE FOR CARRYING OUT THE INVENTION

(1) According to one aspect of the present invention, there is provided an energy storage apparatus that includes: an energy storage device; a sensor mounted on the energy storage device; and a holding member that holds the sensor in a state where a detection surface of the sensor faces the energy storage device, wherein the sensor includes a protruding portion that protrudes laterally, the holding member includes: an oppositely facing surface that faces the protruding portion; and a fixing portion that is provided to the oppositely facing surface and fixes the protruding portion in a state where the fixing portion penetrates the protruding portion, an a gap is formed between the protruding portion and the oppositely facing surface.
   According to the energy storage apparatus of one aspect of the present invention, the gap is formed between the protruding portion of the sensor and the oppositely facing surface of the holding member. Accordingly it is possible to restrain the holding member from becoming an obstacle when the detection surface of the sensor approaches the energy storage device at the time of performing assembly. Accordingly, the detection surface of the sensor can be easily brought into contact with the energy storage device with which the bottom surface of the holding member is into contact. Further, the protruding portion is fixed to the holding member in a state where the fixing portion penetrates the protruding portion of the sensor. Accordingly, the movement of the sensor in a direction orthogonal to the penetrating direction is also restricted. As a result, the detection surface of the sensor that is brought into contact with the energy storage device is less likely to be deviated from the predetermined position. Accordingly, the sensor can stably detect the state of the energy storage device.
(2) In the energy storage apparatus according to (1), the holding member may include a bottom surface which is brought into contact with the energy storage device, and a first distance from a detection surface of the sensor to the protruding portion may be a second distance or more from the bottom surface to the oppositely facing surface.
   According to the energy storage apparatus described in (2), when the bottom surface of the holding member and the detection surface of the sensor are brought into contact with one flat surface of the energy storage device, the first distance from the detection surface of the sensor to the protruding portion is equal to or longer than the second distance from the bottom surface of the holding member to the oppositely facing surface. When the first distance and the second distance have such a relationship, the gap is formed between the oppositely facing surface of the holding member and the protruding portion of the sensor. That is, the holding member is restrained from becoming as an obstacle when the detection surface of the sensor approaches the energy storage device at the time of performing assembly. Accordingly, the bottom surface of the holding member and the detection surface of the sensor can be more surely brought into contact with the flat one surface of the energy storage device.
(3) In the energy storage apparatus described in (1) or (2), the protruding portion may extend toward the holding member.
   According to the energy storage apparatus described in (3), since the protruding portion extends toward the holding member, the protruding portion can be easily opposite to the oppositely facing surface when the sensor is assembled to the holding member.
(4) In the energy storage apparatus described in any one of (1) to (3), the protruding portion may extend along the energy storage device.
   According to the energy storage apparatus described in (4), the protruding portion extends along the energy storage device and hence, the detection surface of the sensor can be reliably brought into contact with the energy storage device by fixing the protruding portion with the fixing portion.
(5) In the energy storage apparatus described in any one of (1) to (4), at least a part of the fixing portion may be integrally formed with the holding member by molding.
   According to the energy storage apparatus described in (5), at least a part of the fixing portion is integrally formed with the holding member by molding, the number of parts can be reduced. Further, since the holding member can easily support the fixing portion when the fixing portion receives a load, vibration resistance or impact resistance of the energy storage apparatus can be easily ensured.
(6) In the energy storage apparatus described in (5), the fixing portion may include a shaft portion which penetrates the protruding portion and a head portion which is provided on the shaft portion and presses the protruding portion from a side opposite to the oppositely facing surface, and the shaft portion may be integrally molded with the holding member.
   According to the energy storage apparatus described in (6), the shaft portion of the fixing portion is integrally formed with the holding member by molding and hence, the shaft portion is less likely to be deviated with respect to the holding member than in a mode in which the shaft portion is originally separated from the holding member. Accordingly, it is possible to more reliably restrain the positional deviation of the protruding portion through which the shaft portion penetrates, that is, the positional deviation of the sensor.
(7) In the energy storage apparatus described in (6), the head portion and the shaft portion may be integrally formed with the holding member by molding.
   According to the energy storage apparatus described in (7), the head portion and the shaft portion are integrally formed with the holding member by molding, the number of parts can be more reduced. In particular, it is suitable in a case where the shaft portion integrated with the holding member is made to pass through the protruding portion of the sensor, and then a distal end portion of the shaft portion is deformed by crimping to form the head portion.
(8) According to one aspect of the present invention, there is provided an energy storage apparatus that includes: an energy storage device; a bus bar electrically connected to the energy storage device; a sensor mounted on the bus bar; and a holding member that holds the sensor in a state where a detection surface of the sensor faces the bus bar, wherein the sensor includes a protruding portion that protrudes laterally, the holding member includes: an oppositely facing surface that faces the protruding portion; and a fixing portion that is provided to the oppositely facing surface and fixes the protruding portion in a state where the fixing portion penetrates the protruding portion, and a gap is formed between the protruding portion and the oppositely facing surface.

According to the energy storage apparatus of another aspect of the present invention, the protruding portion is fixed to the holding member in a state where the fixing portion penetrates the protruding portion of the sensor. Accordingly, the movement of the sensor in a direction orthogonal to the penetrating direction is also restricted. As a result, the detection surface of the sensor that is brought into contact with the bus bar is less likely to be deviated from the predetermined position. Accordingly, the sensor can stably detect the state of the energy storage device via the bus bar.

### (Embodiment)

Hereinafter, an energy storage apparatus according to an embodiment of the present invention is described with reference to drawings. All embodiments described hereinafter are comprehensive examples or specific examples. In the following embodiment, numerical values, shapes, materials, constituent elements, arrangement positions and connection modes of the constituent elements, and the like are provided as examples, and are not intended to limit the present invention. In the respective views, sizes and the like are not strictly illustrated.

In the following description and drawings, an arrangement direction of a plurality of energy storage devices, an opposing direction of long-side surfaces in a case of an energy storage device, or a thickness direction of the case is defined as an X-axis direction. An arrangement direction of terminals of one energy storage device or an opposing direction of short-side surfaces in the case of the energy storage device is defined as a Y-axis direction. An arrangement direction of a body portion and an outer lid of an outer case of the energy storage apparatus or a vertical direction is defined as a Z-axis direction. The Z axis direction is also an insertion direction when a plurality of energy storage devices are inserted into a body opening portion of the body portion. These X-axis direction, Y-axis direction, and Z-axis direction are directions that intersect with one another (orthogonal to one another in the embodiment described later). A configuration is also considered where the Z-axis direction is not the vertical direction depending on a use mode. However, in the description made hereinafter, for the sake of convenience of the description, the description is made by assuming the Z-axis direction as the vertical direction. In the description made hereinafter, for example, an X-axis positive direction side indicates an arrow direction side of the X-axis, and an X-axis negative direction side indicates a side opposite to the X-axis positive direction side. The same goes for the Y-axis direction and the Z-axis direction. Expressions indicating the relative directions or the relative postures such as "parallel" or "orthogonal" also include cases where such directions or postures are not taken in a strict meaning of the terms. For example, a state where two directions are orthogonal to each other means not only a state where these two directions are completely orthogonal to each other but also a state where these two directions are substantially orthogonal to each other, that is, for example, a state where these two directions are orthogonal to each other with slight deviation of approximately several percent.

### (Embodiment 1)

### [General description of energy storage apparatus]

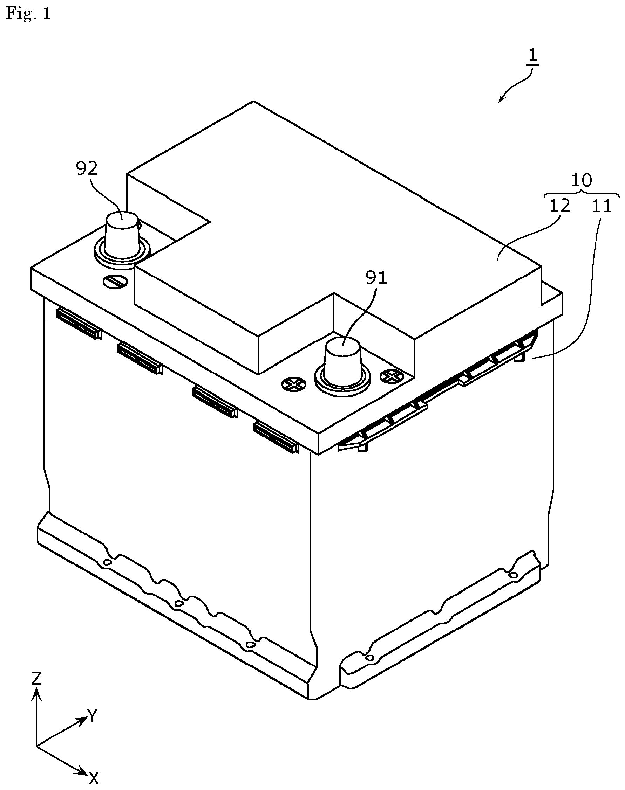

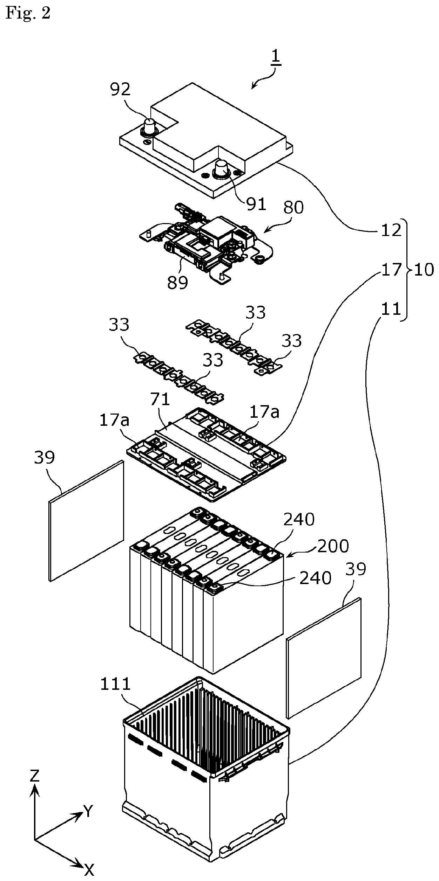

First, the overall configuration of an energy storage apparatus 1 according to the embodiment 1 will be described with reference to Fig. 1 and Fig. 2. Fig. 1 is a perspective view illustrating an appearance of the energy storage apparatus 1 according to the embodiment 1. Fig. 2 is an exploded perspective view illustrating respective constituent elements in a state where the energy storage apparatus 1 of the embodiment 1 is disassembled.

The energy storage apparatus 1 is an apparatus into which electricity can be charged from the outside and from which electricity can be discharged to the outside. In this embodiment, the energy storage apparatus 1 has a substantially rectangular parallelepiped shape. Here, the rectangular parallelepiped is a hexahedron in which all surfaces are formed in a rectangular shape or a square shape. For example, the energy storage apparatus 1 is a battery module (an assembled battery) used in an electricity storage application, a power source application, or the like. To be more specific, the energy storage apparatus 1 is used as a battery or the like for driving a mobile body such as an automobile, a motorcycle, a watercraft, a vessels, a snowmobile, an agriculture machine, a construction machine, or a railway vehicle for an electric railway, or is used as a battery for starting an engine of the mobile body. As the above-described automobile, an electric vehicle (EV), a hybrid electric vehicle (HEV), a plug-in hybrid electric vehicle (PHEV), and an automobile that uses a fissile fuel (a gasoline, a light oil, a liquefied natural gas or the like) are exemplified. As an example of the railway vehicle for the electric railway described above, a train, a monorail, a linear motor car, and a hybrid train including both a diesel engine and an electric motor are exemplified. The energy storage apparatus 1 can also be used as a stationary battery or the like used as a home-use battery, a business use battery, or the like.

As illustrated in Fig. 1 and Fig. 2, the energy storage apparatus 1 includes energy storage devices 200 and an outer case 10 that accommodates the plurality of energy storage devices 200. The outer case 10 includes: a body portion 11 that accommodates the plurality of energy storage devices 200, a bus bar frame 17 that is disposed above the plurality of energy storage devices 200, and an outer lid 12 that covers an upper portion of the bus bar frame 17.

The outer case 10 is a case (a module case) having substantially a rectangular parallelepiped shape (a box shape) that forms the outer case of the energy storage apparatus 1. That is, the outer case 10 is a member that fixes the plurality of energy storage devices 200, the bus bar frame 17 and the like at predetermined positions, and protects these elements from an impact or the like.

The body portion 11 is a bottomed rectangular cylindrical member whose upper portion is opened, and the opened portion forms a body opening portion 111. The body opening portion 111 has a substantially quadrangular shape in a plan view. In the inside of the body opening portion 111 of the body portion 11, besides the plurality of energy storage devices 200 and the bus bar frame 17, a plurality of bus bars 33 that are held by the bus bar frame 17, a connection unit 80 that includes a control circuit and the like, and a pair of end plates 39 are accommodated.

The outer lid 12 is a member having a rectangular shape that closes the body opening portion 111 of the body portion 11. The outer lid 12 is joined to the body portion 11 in a state where the outer lid 12 covers the body opening portion 111 of the body portion 11. The outer lid 12 has: a positive external terminal 91 and a negative external terminal 92. The external terminals 91 and 92 are electrically connected to the plurality of energy storage devices 200 via the connection unit 80 and the bus bars 33. The energy storage apparatus 1 charges electricity from the outside and discharges electricity to the outside, via the external terminals 91, 92. The external terminals 91, 92 are formed of a conductive member made of metal such as a copper alloy like brass, copper, aluminum, or an aluminum alloy.

The body portion 11 and the outer lid 12 of the outer case 10 are made of an insulating member such as, for example, polycarbonate (PC), polypropylene (PP), polyethylene (PE), polystyrene (PS), a polyphenylene sulfide resin (PPS), polyphenylene ether (PPE (including modified PPE)), polyethylene terephthalate (PET), polybutylene terephthalate (PBT), polyether ether ketone (PEEK), tetrafluoroethylene/perfluoroalkyl vinyl ether (PFA), polytetrafluoroethylene (PTFE), polyether sulfone (PES), an ABS resin, or a composite material of the above-mentioned materials, or metal to which insulation coating is applied. With such a configuration, the outer case 10 prevents the energy storage devices 200 and the like from coming into contact with metal members or the like outside the outer case 10. The outer case 10 may be formed of a conductive member made of metal or the like provided that the electric insulation property of the energy storage device 200 and the like is ensured.

The energy storage device 200 is a secondary battery (battery cell) that can be charged with electricity and can discharge electricity. More specifically, the energy storage device 200 is a nonaqueous electrolyte secondary battery such as a lithium ion secondary battery. The energy storage device 200 has a flat rectangular parallelepiped shape (prismatic shape). In this embodiment, eight pieces of energy storage devices 200 are arranged side by side in the X-axis direction. The shape of the energy storage device 200 and the number of the energy storage devices 200 arranged in the X-axis direction are not limited. The energy storage device 200 is not limited to a nonaqueous electrolyte secondary battery. The energy storage device 200 may be a secondary battery other than the nonaqueous electrolyte secondary battery, a capacitor, or a primary battery in which electricity is already charged even when a user does not charge the battery. The energy storage device 200 may be a battery that uses a solid electrolyte.

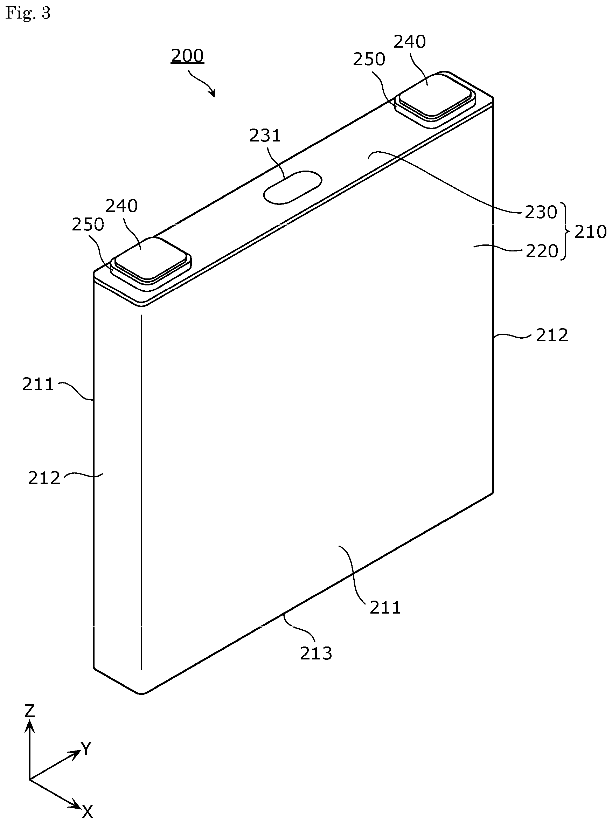

Fig. 3 is a perspective view illustrating an appearance of the energy storage device 200 according to the embodiment 1. The energy storage device 200 includes: a case 210; a pair of terminals 240 (the positive terminal 240 and the negative terminal 240); and an upper gasket 250. In the case 210, a lower gasket, an electrode assembly, a pair of current collectors (the positive current collector and the negative current collector), an electrolyte solution (a nonaqueous electrolyte), and the like are accommodated. However, these components are not illustrated in the drawing. A kind of the electrolyte solution is not particularly limited provided that the performance of the energy storage device 200 is not impaired, and various kinds of electrolyte solutions can be selected.

The energy storage device 200 may further include, besides the components described above, spacers that are disposed on the sides of the electrode assembly or below the electrode assembly, an insulating film that wraps the electrode assembly and the like. Further, an insulating film (such as a shrink tube) that covers an outer surface of the case 210 may be disposed surrounding the case 210. The material of the insulating film is not particularly limited provided that insulating property required for the energy storage device 200 can be secured. As such a material, a resin having insulating property such as PC, PP, PE, PPS, PET, PBT and an ABS resin, an epoxy resin, Kapton (registered trademark), Teflon (registered trademark), silicon, polyisoprene and polyvinyl chloride and the like are exemplified.

The case 210 is a case having a rectangular parallelepiped shape (a prismatic shape or a box shape). The case 210 includes: a case body 220 that has an opening; and a lid body 230 that closes the opening of the case body 220. The case body 220 is a member that forms the body portion of the case 210, and has a rectangular cylindrical shape and a bottom. The opening is formed in the case body 220 on the Z-axis positive direction side. The lid body 230 is a plate-shaped member having a rectangular shape that forms a lid portion of the case 210. The lid body 230 is disposed on the case body 220 on the Z-axis positive direction, and extends in the Y-axis direction. On the lid body 230, a gas release valve 231 and a solution filling portion (not illustrated in the drawings) are formed. The gas release valve 231 releases a pressure in the case 210 when such a pressure becomes excessively large. The solution filling portion (not illustrated in the drawings) is provided for filling the case 210 with an electrolyte solution. The material of the case 210 (the case body 220 and the lid body 230) is not particularly limited. For example, the case 210 may be made of metal that is weldable (joinable) such as stainless steel, aluminum, an aluminum alloy, iron, or a plated steel plate. A resin can be also used as the material of the case 210. The case 210 has the structure where the inside of the case 210 is sealed. Such sealed structure is obtained by accommodating the electrode assembly and the like in the case body 220 and, thereafter, by joining the case body 220 and the lid body 230 by welding or the like.

The case 210 has: a pair of long side surfaces 211 on side surfaces of the case 210 on both sides in the X-axis direction; a pair of short side surfaces 212 on side surfaces of the case 210 on both sides in the Y-axis direction; and a bottom surface 213 on the Z-axis negative direction side. The long side surfaces 211 are rectangular and flat surface portions forming long side surfaces of the case 210. The long side surfaces 211 are disposed adjacently to the short side surfaces 212 and to the bottom surface 213. The short side surfaces 212 are rectangular and flat surface portions forming the short side surfaces of the case 210. The bottom surface 213 is a rectangular flat surface portion forming the bottom surface of the case 210, and is disposed adjacently to the long side surfaces 211 and the short side surfaces 212.

The terminals 240 are terminal members (a positive terminal and a negative terminal) of the energy storage device 200 and disposed on the lid body 230. The terminals 240 are electrically connected to a positive electrode plate and a negative electrode plate of the electrode assembly via the current collectors. That is, the terminals 240 are members made of metal that are provided for discharging electricity stored in the electrode assembly to a space outside the energy storage device 200, and for charging electricity into an internal space in the energy storage device 200 so as to store electricity in the electrode assembly. The terminals 240 are made of aluminum, an aluminum alloy, copper, a copper alloy, or the like.

The electrode assembly is an energy storage element (power generating element) formed by stacking a positive electrode plate, a negative electrode plate, and separators to each other. The positive electrode plate is formed such that a positive active material layer is formed on a positive substrate layer that is a current collecting foil made of metal such as aluminum or an aluminum alloy. The negative electrode plate is formed such that a negative active material layer is formed on a negative substrate layer that is a current collecting foil made of metal such as copper or a copper alloy. As an active material used for forming the positive active material layer and an active material used for forming the negative active material layer, known materials can be appropriately used provided that these materials can occlude and discharge lithium ions. As the separator, a microporous sheet, a nonwoven fabric or the like made of a resin can be used. In the embodiment, the electrode assembly is formed by stacking plates (positive electrode plates and negative electrode plates) in the X-axis direction. The electrode assembly may be an electrode assembly in any form such as a winding-type electrode assembly formed by winding plates (a positive electrode plate and a negative electrode plate), a layered-type (stacking-type) electrode assembly formed by stacking a plurality of flat-plate-shaped plates, or a bellows-type electrode assembly formed by folding plates in a bellows shape.

The current collectors (the positive electrode current collector and the negative electrode current collector) are conductive members and are electrically connected to the terminals 240 and the electrode assembly. The positive electrode current collector is made of aluminum, an aluminum alloy or the like substantially in the same manner as the positive substrate layer of the positive electrode plate. The negative electrode current collector is made of copper, a copper alloy, or the like substantially in the same manner as the negative substrate layer of the negative electrode plate.

An upper gasket 250 is a gasket that is disposed between the lid body 230 and the terminal 240. The upper gasket 250 provides insulation and sealing between the lid body 230 and the terminals 240. A lower gasket is a gasket that is disposed between the lid body 230 and the current collector. The lower gasket provides insulation and sealing between the lid body 230 and the current collector. The upper gasket 250 and the lower gasket may be formed of any material provided that these gaskets have electrical insulating property.

The bus bar 33 is a rectangular plate-like member which is disposed over at least two energy storage devices 200 in a state where the bus bar 33 is held by the bus bar frame 17. The bus bar 33 electrically connects the terminals 240 (the positive terminal and the negative terminal) of such at least two energy storage devices 200. The bus bar 33 is formed of a conductive member made of metal such as, for example, copper, a copper alloy, aluminum, an aluminum alloy, nickel, a clad material or the like. In the embodiment, using five bus bars 33, four sets of energy storage device groups are formed where two energy storage devices 200 are connected with each other in parallel in each energy storage device group. Then, four sets of energy storage device groups are connected in series.

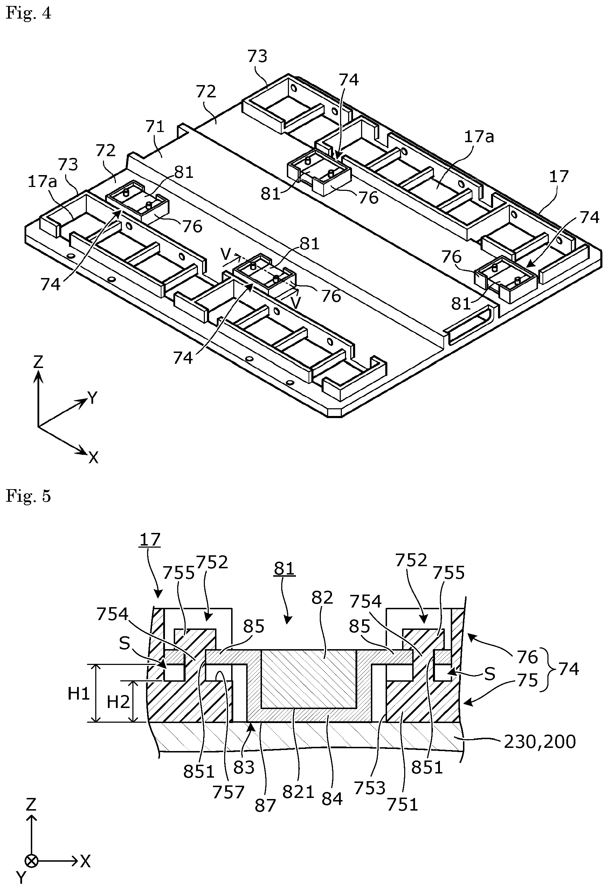

The connection unit 80 is a unit that includes a plurality of bus bars, a control board, and the like, and connects the energy storage device groups comprising eight energy storage devices 200 and the external terminals 91 and 92 to each other. The control board that the connection unit 80 includes has a plurality of electric components. Using these plurality of electric components, a detection circuit that detects states of respective energy storage devices 200, a control circuit that controls charging and discharging of the energy storage devices 200, and the like are formed. The connection unit 80 includes a connector portion 89 of the detection circuit or the control circuit. In the embodiment, the connection unit 80 is fixed to the bus bar frame 17. The detection circuit and the control circuit may be formed separately on individual boards. The connection unit 80 may not have the control board. In this case, a control device disposed outside the energy storage apparatus 1 may control charging and discharging electricity of the respective energy storage devices 200. Sensors 81 (see Fig. 4 and the like) that are mounted on the energy storage devices 200 are electrically connected to the detection circuit. In such a configuration, the sensor 81 is a sensor that detects a state of the energy storage device 200. Specifically, as an example of the sensor 81, a temperature sensor (thermistor) that detects a temperature of the energy storage device 200, a voltage sensor that detects a voltage of the energy storage device 200, or the like is named.

The bus bar frame 17 is a member disposed above the plurality of energy storage devices 200 (on a side where the terminals 240 are disposed), and is an example of a holding member. In this embodiment, the bus bar frame 17 is a member which holds the bus bars 33 and the sensors 81 mounted on the energy storage devices 200. More specifically, the bus bar frame 17 is a member that holds the plurality of bus bars 33, the connection unit 80, the sensors 81, other wirings and the like (not illustrated), and can restrict the positions of these members and the like. A plurality of bus bar opening portions 17a are formed in the bus bar frame 17. The plurality of bus bar opening portions 17a are provided for respectively holding the plurality of bus bars 33. The plurality of bus bar opening portions 17a are also provided for allowing portions of the each of plurality of bus bars 33 to be exposed to a side where the plurality of energy storage devices 200 are disposed through such bus bar opening portions 17a. The bus bar frame 17 is fixed to the body portion 11. With such a configuration, for example, the bus bar frame 17 also performs a function of restricting the upward movement (toward the Z axis positive direction side) of the plurality of energy storage devices 200.

There may be a case where the bus bar frame 17 is also referred to as a "bus bar plate", an "intermediate lid" or the like. The bus bar frame 17 is formed of an insulating member made of a material such as PC, PP, PE, PS, PPS, PPE (including modified PPE), PET, PBT, PEEK, PFA, PTFE, PES, an ABS resin, or a composite material of these materials, or metal to which insulation coating is applied.

A pair of end plates 39 are plate bodies having a rectangular shape that are disposed at the positions where the end plates 39 collectively sandwich the plurality of energy storage devices 200 in the body portion 11. To be more specific, the pair of end plates 39 are disposed at the positions where the end plates 39 sandwich the plurality of energy storage devices 200 in the X axis direction in a posture where the end plates 39 are arranged parallel to a YZ plane. That is, the pair of end plates 39 are disposed so as to overlap with the long side surfaces 211 of the cases 210 of the energy storage devices 200 disposed on the outermost sides. The end plate 39 is made of, for example, a metal to which insulation coating is applied or the like.

### [Assembled structure of bus bar frame and sensors]

Next, an assembled structure of the bus bar frame 17 and the sensors 81 is described. Fig. 4 is a perspective view illustrating the bus bar frame 17 according to the embodiment 1. Specifically, Fig. 4 is a perspective view of the bus bar frame 17 as viewed from above. Fig. 5 is a cross-sectional view illustrating the assembled structure that is formed of the bus bar frame 17 and the sensors 81 according to the embodiment 1. Specifically, Fig. 5 is a cross-sectional view taken along a line V-V in Fig. 4.

First, the bus bar frame 17 is described in detail. As illustrated in Fig. 4, the bus bar frame 17 includes a gas path portion 71, sensor arrangement portions 72, and bus bar mounting portions 73. The gas path portion 71 is a portion that is disposed at a middle portion of the bus bar frame 17 in the Y-axis direction, and extends in the X-axis direction. The gas path portion 71 is a path for a gas discharged from the gas release valves 231 of the energy storage devices 200.

The sensor arrangement portions 72 are a pair of portions that sandwiches the gas path portion 71 in the Y-axis direction. The sensor arrangement portions 72 extend in the X-axis direction respectively. Two sensor fixing portions 74 are arranged in the X-axis direction at portions of the sensor arrangement portion 72 in the Y-axis positive direction. On the other hand, two sensor fixing portions 74 are also arranged in the X-axis direction at portions of the sensor arrangement portion 72 in the Y-axis negative direction. The respective sensor fixing portions 74 are disposed at different positions in the X-axis direction. In other words, the respective sensor fixing portions 74 are disposed at the positions that do not overlap with each other as viewed in the Y-axis direction. Each sensor fixing portion 74 is a portion at which the sensor 81 is fixed.

As illustrated in Fig. 5, the sensor fixing portion 74 includes: a holding portion 75 that holds the sensor 81; and a wall portion 76 that surrounds the holding portion 75.

The holding portion 75 includes a pedestal portion 751 and a pair of fixing portions 752. The pedestal portion 751 is supported on the lid body 230 of the energy storage device 200, and an opening portion 753 is formed in a middle portion of the pedestal portion 751 in a state where the opening portion 753 penetrates the pedestal portion 751 in the Y-axis direction. A bottom surface (lower surface) of the pedestal portion 751 may be in direct contact with the lid body 230, or may be in indirect contact with the lid body 230 with an adhesive or the like interposed there between. On an upper surface of the pedestal portion 751, the pair of fixing portions 752 is mounted at positions where the pair of fixing portions 752 sandwich the opening portion 753 in the X-axis direction.

The pair of fixing portions 752 each includes: a shaft portion 754 extending upward from an upper surface of the pedestal portion 751; and a head portion 755 that is continuously formed with a distal end portion of the shaft portion 754 and has a larger diameter than the shaft portion 754. The shaft portion 754 and the head portion 755 are integrally formed with the pedestal portion 751 by molding. That is, the shaft portion 754 and the head portion 755 are integrally formed with the bus bar frame 17 by molding, and these portions are formed as one member of a single material.

As illustrated in Fig. 4, the wall portion 76 surrounds the periphery of the holding portion 75 such that one end portion of the holding portion 75 in the Y-axis direction is partially opened. For example, in the sensor fixing portion 74 disposed at a portion of the sensor arrangement portion 72 in the Y-axis negative direction, the wall portion 76 surrounds the periphery of the holding portion 75 such that only a middle portion in the X-axis direction of an end portion of the holding portion 75 in the Y-axis positive direction is opened. On the other hand, in the sensor fixing portion 74 disposed at a portion of the sensor arrangement portion 72 in the Y-axis positive direction, the wall portion 76 surrounds the periphery of the holding portion 75 such that only a middle portion in the X-axis direction of an end portion of the holding portion 75 in the Y-axis negative direction is opened. Wirings (not illustrated in the drawing) connected to the sensors 81 are led out from the opening portions formed in the wall portions 76. The wirings are routed to a connector portion 89 of the connection unit 80, and are connected to the connector portion 89.

Next, the sensor 81 is described in detail. As illustrated in Fig. 5, the sensor 81 includes a sensor body 82 and a mounting member 83.

The sensor body 82 is a part that detects a state of the energy storage device 200. The sensor body 82 is formed in a rectangular shape as viewed in a plan view, and a bottom surface of the sensor body 82 is a measurement surface 821. The sensor body 82 includes wiring (not illustrated in the drawing) that is connected to the detection circuit of the connection unit 80.

The sensor body 82 has a substantially rectangular parallelepiped shape that is elongated in the Y-axis direction. That is, the sensor body 82 is disposed such that the Y-axis direction becomes the longitudinal direction of the sensor body 82. With respect to the wiring that is led out from the sensor body 82, such a wiring is led out from an end portion of the sensor body 82 in the Y-axis direction.

Mounting members 83 are members for mounting the sensor bodies 82 on the bus bar frame 17. It is preferable that the mounting member 83 be made of a heat conductive member having a relatively high thermal conductivity. For example, as the mounting member 83, a member obtained by bending a sheet made of metal such as aluminum or copper can be used. The mounting member 83 is an integral body formed of an accommodating portion 84 and a pair of support protruding portion 85. The mounting member 83 has substantially same size as the sensor body 82 in the Y-axis direction.

The accommodating portion 84 is a portion for accommodating the sensor body 82. The accommodating portion 84 is formed in a substantially U shape as viewed in the Y-axis direction. The measurement surface 821 of the sensor body 82 is brought into contact with an inner bottom surface of the accommodating portion 84. On the other hand, the lid body 230 of the energy storage device 200 is brought into contact with an outer bottom surface of the accommodating portion 84. As described above, the mounting member 83 is formed of a thermally conductive member having a relatively high thermal conductivity. Accordingly, the heat of the energy storage device 200 received by the outer bottom surface of the accommodating portion 84 is transferred from the inner bottom surface of the accommodating portion 84 to the measurement surface 821 of the sensor body 82. Accordingly, the outer bottom surface of the accommodating portion 84 may be also referred to as a detection surface 87 of the sensor 81.

Here, by forming an opening in the bottom portion of the accommodating portion 84, the measurement surface 821 of the sensor body 82 can be exposed through the opening and can be brought into contact with the lid body 230 of the energy storage device 200. In this case, the measurement surface 821 of the sensor body 82 can be referred to as the detection surface 87 of the sensor 81.

There may be a case where a heat conductive sheet having a relatively high thermal conductivity is stacked on an outer bottom surface of the accommodating portion 84. An outer surface of the heat conductive sheet is brought into contact with the lid body 230 of the energy storage device 200. That is, heat generated from the energy storage device 200 can be transferred to the measurement surface 821 of the sensor body 82 via the heat conductive sheet and the mounting member 83. In this case, the outer surface of the heat conductive sheet can be referred to as the detection surface 87 of the sensor 81. The heat conductive sheet may be made of a resin or metal provided that the heat conductive sheet has insulating property.

The pair of protruding portions 85 protrudes outward (sideward) along an XY plane from both respective end portions of the accommodating portion 84. Specifically, out of the pair of protruding portions 85, the protruding portion 85 in the X-axis positive direction protrudes in the X-axis positive direction, and the protruding portion 85 in the X-axis negative direction protrudes in the X-axis negative direction. Accordingly, it can be said that each protruding portion 85 extends along the lid body 230 of the energy storage device 200, or extends toward the wall portion 76 of the bus bar frame 17. Each protruding portion 85 is formed in a flat plate shape, and a through hole 851 is formed in the protruding portion 85 in a penetrating manner in the Z-axis direction. The shaft portion 754 of each fixing portion 752 passes through each through hole 851. By engaging the shaft portion 754 with an inner peripheral surface of the through hole 851 by fitting engagement, the shaft portion 754 and the inner peripheral surface are brought into contact with each other over the entire circumference. Accordingly, the movement of the sensor 81 in the direction along the XY plane can be restricted. The head portion 755 of each fixing portion 752 is brought into contact with an upper surface of each protruding portion 85. Accordingly, the movement of the sensor 81 in the upward direction (in the Z-axis positive direction) is restricted. In such a state, the accommodating portion 84 and the sensor body 82 are disposed in the opening portion 753 formed in the pedestal portion 751, and the detection surface 87 of the sensor 81 is brought into contact with the lid body 230 of the energy storage device 200. That is, a state is brought about where the sensor 81 can detect a temperature or a voltage of the energy storage device 200. In such a state, it can be said that the upper surface of pedestal portion 751 is an oppositely facing surface 757 that oppositely faces the protruding portion 85.

Fig. 5 exemplifies a case where, the bottom surface of the pedestal portion 751 of the bus bar frame 17 and the detection surfaces 87 of the sensors 81 are respectively brought into contact with the flat same surface (the upper surface of the lid body 230) of the energy storage device 200. In this case, as viewed in the Y axis direction, a first distance H1 that is a length in the Z axis direction from the detection surface 87 of the sensor 81 to each protruding portions 85 is equal to or longer than a second distance H2 that is a length in the Z axis direction from a bottom surface of the pedestal portion 751 that is brought into contact with the energy storage device 200 to the oppositely facing surface 757. The first distance H1 is determined from an average value of distances at arbitrary three points obtained from imaged data after imaging the energy storage apparatus 1 by an X-ray CT. The same goes for the second distance H2. A gap S is formed between the oppositely facing surface 757 and each protruding portion 85. Due to the formation of the gap S, the detection surface 87 of the sensor 81 can be easily brought into contact with the energy storage device 200. Details of the above-mentioned structure will be described later.

As illustrated in Fig. 4, the bus bar mounting portions 73 are a pair of portions that sandwich the gas path portion 71 and the pair of sensor arrangement portions 72 in the Y axis direction. The bus bar mounting portions 73 extend in the X axis direction respectively. The bus bar mounting portion 73 is a portion where the plurality of bus bars 33 are mounted. A plurality of bus bar opening portions 17a are formed in the bus bar mounting portion 73. The plurality of bus bar opening portions 17a are formed so as to expose portions of the respective bus bars 33 where the portions are connected to the energy storage devices 200.

### [Method of assembling sensors and bus bar frame]

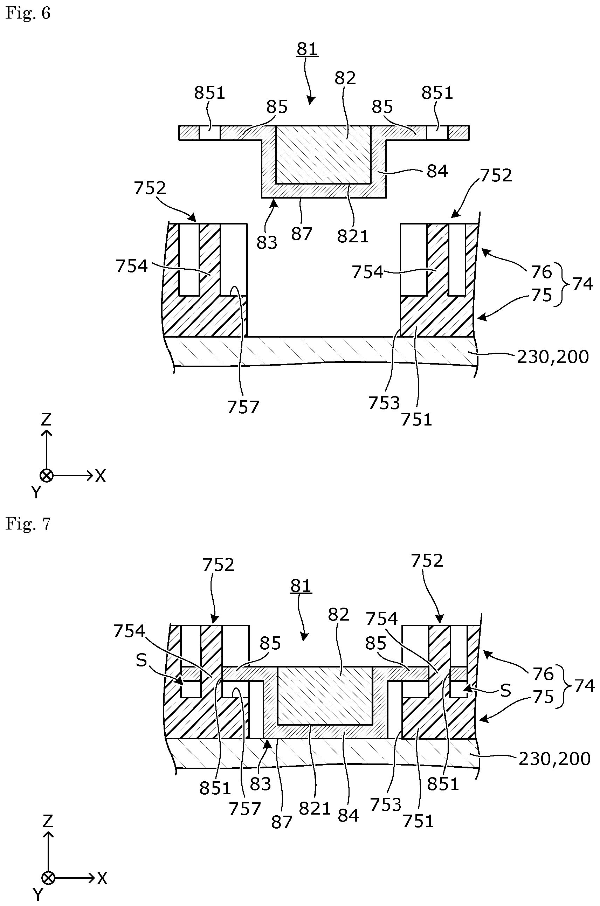

Next, the method of assembling the sensors 81 and the bus bar frame 17 is described. Fig. 6 is a cross-sectional view illustrating a state before the sensor 81 according to the embodiment 1 is assembled to the bus bar frame 17. Fig. 7 is a cross-sectional view illustrating a state where the sensor 81 according to the embodiment 1 is in the process of being assembled to the bus bar frame 17. Fig. 6 and Fig. 7 are views that correspond to Fig. 5.

As illustrated in Fig. 6, in a state before the sensor 81 is assembled to the bus bar frame 17, the bus bar frame 17 is mounted on the respective energy storage devices 200, and each fixing portion 752 of the bus bar frame 17 does not have the head portion 755 and is formed of only the shaft portion 754. An operator inserts the sensor 81 into the wall portion 76 from above the pedestal portion 751. In performing such an operation, the operator inserts the shaft portions 754 of the respective fixing portions 752 into the through holes 851 formed in respective protruding portions 85 of the sensor 81 and, thereafter, the sensor 81 is lowered. At the time of inserting the shaft portions 754 of the sensor 81, the distal end portions of the respective protruding portions 85 are brought into contact with the inner wall surfaces of the wall portions 76. Accordingly, the sensor 81 is guided by the inner wall surfaces of the wall portions 76 and hence, the sensor 81 can be smoothly lowered.

When the sensor 81 is lowered, the accommodating portion 84 and the sensor body 82 of the sensor 81 are inserted into the opening portion 753 formed in the pedestal portion 751, and the detection surface 87 is finally brought into contact with the lid body 230 of the energy storage device 200 (see Fig. 7). As described previously, the gap S is formed between the oppositely facing surface 757 of the pedestal portion 751 and each protruding portion 85. The sizes of the respective member are set such that the gap S is formed and hence, there is no possibility that the respective protruding portions 85 interfere with the pedestal portion 751 when the sensor 81 is lowered. That is, it is possible to prevent the pedestal portion 751 from becoming an obstacle when the detection surface 87 of the sensor 81 approaches the energy storage device 200 at the time of performing assembling. Accordingly, it is possible to easily bring the detection surface 87 of the sensor 81 into contact with the energy storage device 200.

Next, an operator forms the head portion 755 by deforming the distal end portion of the shaft portion 754 of each fixing portion 752 by thermal crimping. The head portion 755 has a larger shape as viewed in the axial direction of the shaft portion 754 (as viewed in the Z-axis direction) than the shaft portion 754, and presses the protruding portion 85 from the side opposite to the oppositely facing surface 757. That is, the head portion 755 presses the upper surface of the protruding portion 85 and hence, it is possible to prevent the removal of the protruding portion 85. With such a configuration, the movement of the sensor 81 in the Z axis positive direction is restricted and hence, a state where the detection surface 87 of the sensor 81 is brought into contact with the energy storage device 200 can be maintained. In this embodiment, the case is exemplified where the distal end portion of the shaft portion 754 is deformed by thermal crimping. However, the distal end portion of the shaft portion 754 may be deformed by other crimping methods.

As described above, the method for manufacturing the energy storage apparatus 1 includes the step of fixing the sensor 81 by making the fixing portions 752 of the bus bar frame 17 mounted on the energy storage devices 200 penetrate the protruding portions 85 of the sensor 81 such that the gap is formed between the oppositely facing surface 757 of the pedestal portion 751 and the protruding portions 85.

### [Advantageous effects and the like]

As described above, according to the energy storage apparatus 1 of this embodiment, the gap S is formed between the protruding portion 85 of the sensor 81 and the oppositely facing surface 757 of the bus bar frame 17. That is, it is possible to restrain the bus bar frame 17 from becoming an obstacle when the detection surface 87 of the sensor 81 approaches the energy storage device 200 at the time of performing assembling. Accordingly, it is possible to surely bring the detection surface 87 of the sensor 81 into contact with the energy storage device 200 with which the bottom surface of the bus bar frame 17 is brought into contact. Further, the protruding portion 85 of the sensor 81 is fixed to the bus bar frame 17 in a state where the fixing portion 752 penetrates the protruding portion 85 of the sensor 81. Accordingly, it is also possible to restrict the movement of the sensor 81 in the direction orthogonal to the penetrating direction (Z-axis direction). With these configurations, the detection surface 87 of the sensor 81 that is brought into contact with the energy storage device 200 is less likely to be deviated from the predetermined position. Accordingly, the sensor 81 can stably detect the state of the energy storage device 200.

In addition, because of the formation of the gap S, it is also possible to allow the fixing portion 752 to press the protruding portion 85 such that the protruding portion 85 is elastically deformed. The protruding portion 85 intends to restore its shape against such elastic deformation, the detection surface 87 of the sensor 81 is pressed against the energy storage device 200 and hence, it is possible to restrain the occurrence of a phenomenon that the detection surface 87 is spaced apart from the energy storage device 200. That is, the sensor 81 can more stably detect the state of the energy storage device 200.

Assume a case where the protruding portion 85 is deformed to an extent that the protruding portion 85 is brought into contact with the oppositely facing surface 757. In such a case, a large stress may act on the protruding portion 85 so that the protruding portion 85 may be damaged. By forming the gap S between the protruding portion 85 after elastic deformation and the oppositely facing surface 757, an amount of elastic deformation of the protruding portion 85 can be suppressed and hence, a damage to the protruding portion 85 can be restrained.

For example, in a case where the bottom surface of the pedestal portion 751 and the detection surface 87 of the sensor 81 are brought into contact with one flat surface of the energy storage device 200, the first distance H1 from the detection surface 87 of the sensor 81 to the protruding portion 85 is equal to or larger than the second distance H2 from the bottom surface of the pedestal portion 751 to the oppositely facing surface 757. By providing such a relationship between the first distance H1 and the second distance H2, the gap S is formed between the oppositely facing surface 757 of the bus bar frame 17 and the protruding portion 85 of the sensor 81. That is, it is possible to prevent the bus bar frame 17 from becoming an obstacle when the detection surface 87 of the sensor 81 approaches the energy storage device 200 at the time of performing assembling. Accordingly, it is possible to more surely bring the bottom surface of the pedestal portion 751 and the detection surface 87 of the sensor 81 into contact with the flat one surface of the energy storage device 200.

At least a part of the fixing portion 752 is integrally formed with the bus bar frame 17 by molding, the number of parts can be reduced. Further, when the fixing portion 752 receives a load, the bus bar frame 17 can easily support the fixing portion 752. Accordingly, it is possible to allow the energy storage apparatus 1 to easily ensure the vibration resistance or the impact resistance.

In particular, in this embodiment, the shaft portion 754 of the fixing portion 752 is integrally formed with the bus bar frame 17 by molding. Accordingly, the shaft portion 754 is less likely to be deviated with respect to the bus bar frame 17 compared to a case where the shaft portion 754 is originally formed as a component separate from the bus bar frame 17. Accordingly, it is possible to more reliably restrain the positional deviation of the protruding portion 85 through which the shaft portion 754 passes, that is, the positional deviation of the sensor 81.

According to this embodiment, the head portion 755 and the shaft portion 754 are integrally formed with the bus bar frame 17 by molding, the number of parts can be further reduced. Such a configuration is suitable in a case where the shaft portion 754 that is integrally formed with the bus bar frame 17 is made to pass through the protruding portion 85 of the sensor 81 and, then, the head portion 755 is formed by deforming the distal end portion of the shaft portion 754 by crimping.

### [Description of modifications]

Next, respective modifications of the above-mentioned embodiment 1 will be described. In the following description, components equivalent to the components in the above-mentioned embodiment or other modifications are denoted by the same reference numerals, and the description of these components may be omitted.

### (Modification 1)

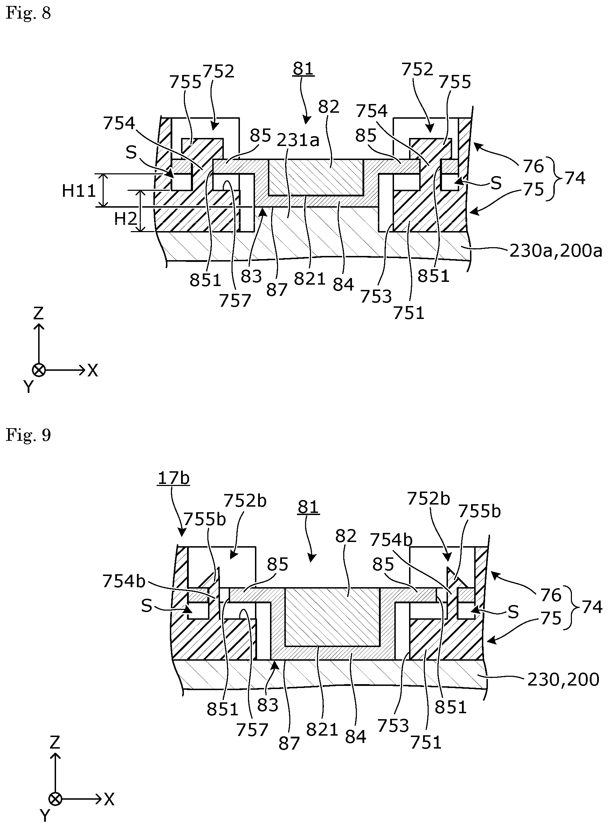

In the above-described embodiment 1, the case has been exemplified where the first distance H1 is equal to or larger than the second distance H2. In the modification 1, a case is described where the first distance H11 is smaller than the second distance H2 will be described. Fig. 8 is a cross-sectional view illustrating an assembled structure that is formed of a bus bar frame 17 and a sensors 81 according to the modification 1.

As illustrated in Fig. 8, on a lid body 230a of an energy storage device 200a, a convex part 231a that projects toward the inside of an opening portion 753 of the bus bar frame 17 is formed. An upper surface of the convex part 231a is formed in a flat surface, and is a flat surface different from another upper surface of the lid body 230a. A bottom surface of a pedestal portion 751 is brought into contact with another upper surface of the lid body 230a, and a detection surface 87 of a sensor 81 is in contact with an upper surface of the convex part 231a. In this case, the first distance H11 from the detection surface 87 of the sensor 81 to the protruding portion 85 is smaller than the second distance H2 from the bottom surface of the pedestal portion 751 to the oppositely facing surface 757. Also in this case, it is sufficient that a gap S is formed between the protruding portion 85 of the sensor 81 and the oppositely facing surface 757 of the bus bar frame 17.

### (Modification 2)

In the above-described embodiment 1, the case where the fixing portion 752 has the head portion 755 formed by thermal crimping has been exemplified. In modification 2, the description is made with respect to a fixing portion 752b that adopts a snap-fit structure. Fig. 9 is a cross-sectional view illustrating an assembled structure that is formed of a bus bar frame 17b and a sensors 81 according to the modification 2.

A fixing portion 752b has a shaft portion 754b and a head portion 755b integrally formed with the bus bar frame 17b by molding. The shaft portion 754b has an outer shape narrower than an inner diameter of a through hole 851 formed in the protruding portion 85, and is disposed in an elastically deformable manner in the through hole 851. The head portion 755b has a tapered shape having an inclined surface, and a proximal end portion of the head portion 755b protrudes outward from the shaft portion 754b. The proximal end portion of the head portion 755b is formed in a size that allows the proximal end portion to penetrate the through hole 851.

When assembling the sensor 81 to the bus bar frame 17b, an operator inserts the head portion 755b into the through hole 851 of each protruding portion 85 of the sensor 81. With such an operation, the inclined surface of the head portion 755b is pressed by the protruding portion 85, and the shaft portion 754b is elastically deformed. Thereafter, when the head portion 755b passes through the through hole 851 of the protruding portion 85, the shaft portion 754b elastically returns to the original shape. As a result, the proximal end portion of the head portion 755b presses an upper surface of the protruding portion 85 and hence, it is possible to prevent the removal of the protruding portion 85.

### (Modification 3)

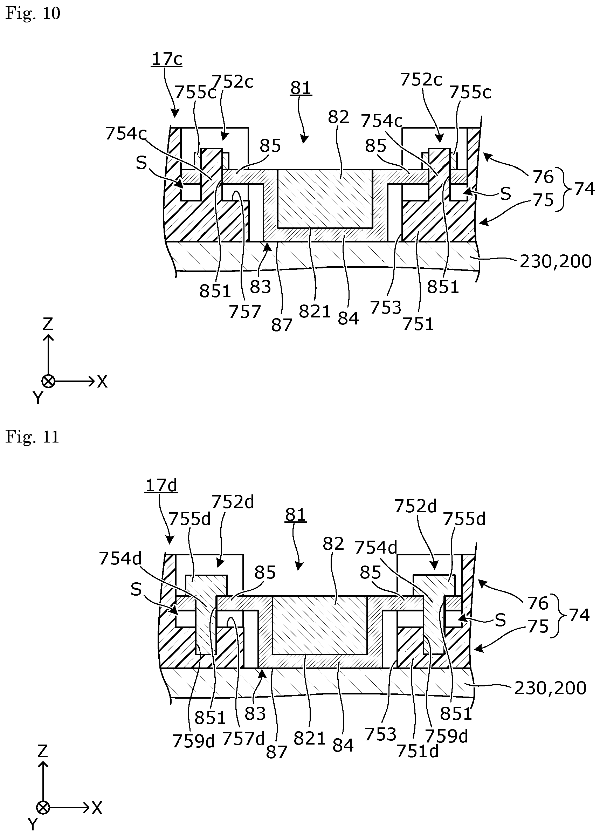

In the above-described embodiment 1, the case has been described where the shaft portion 754 and the head portion 755 are integrally formed with the bus bar frame 17 by molding. In modification 3, the description is made with respect to a fixing portion 752c where a fixing portion 752c where only a shaft portion 754c is integrally formed with a bus bar frame 17c by molding. Fig. 10 is a cross-sectional view illustrating an assembled structure that is formed of the bus bar frame 17c and a sensors 81 according to the modification 3.

As illustrated in Fig. 10, in the fixing portion 752c according to modification 3, the shaft portion 754c that is integrally formed with the bus bar frame 17c by molding is formed in an upwardly extending manner from an oppositely facing surface 757 of the pedestal portion 751. Ahead portion 755c that is a component separate from the shaft portion 754c is mounted on a distal end portion of the shaft portion 754c. The head portion 755c is fixed to the shaft portion 754 c by fitting, press fitting, screw fastening, adhesion, welding, or the like. That is, the head portion 755c presses an upper surface of the protruding portion 85 and hence, it is possible to prevent the removal of the protruding portion 85.

### (Modification 4)

In the above-described embodiment 1, the case has been described where the shaft portion 754 and the head portion 755 are integrally formed with the bus bar frame 17 by molding. In the modification 4, the description is made with respect to a fixing portion 752d where a shaft portion 754d and a head portion 755 d are components originally separate from the bus bar frame 17d. Fig. 11 is a cross-sectional view illustrating an assembled structure that is formed of the bus bar frame 17d and a sensors 81 according to the embodiment 4.

As illustrated in Fig. 11, in the fixing portion 752d according to modification 4, the shaft portion 754d and the head portion 755d are integrally formed with each other by molding. In a bus bar frame 17d, a hole portion 759d that is recessed in a Z-axis direction is formed in an oppositely facing surface 757d of each pedestal portion 751d. The shaft portion 754d of the fixing portion 752d is mounted in the hole portion 759d in a state where the shaft portion 754d penetrates a through hole 851 formed in a protruding portion 85. The shaft portion 754d is fixed to the hole portion 759d by fitting, press-fitting, screw fastening, adhesion, welding, or the like. After the shaft portion 754d is fixed, the head portion 755d presses an upper surface of the protruding portion 85 and hence, it is possible to prevent the removal of the protruding portion 85. In the fixing portion 752d, the shaft portion 754d and the head portion 755d may be formed as components originally separate from each other.

### (Embodiment 2)

In the above-mentioned embodiment 1, the description is made with respect to the case where the sensor 81 is brought into contact with the energy storage device 200. In embodiment 2, a case where a sensor 81 is brought into contact with a bus bar 33 that is electrically connected to the energy storage device 200. In the following description, components equivalent to the components in the embodiment 1 are denoted by the same reference numerals, and the description of these components may be omitted.

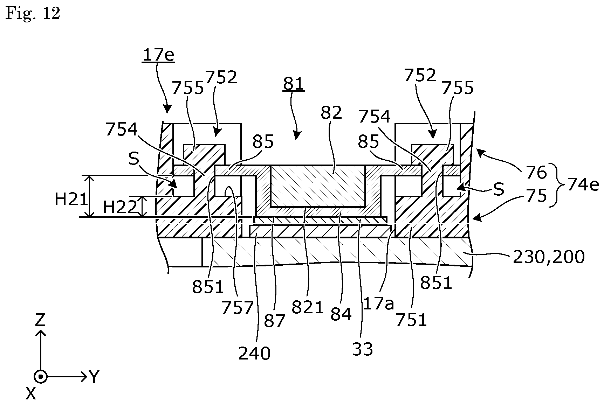

Fig. 12 is a cross-sectional view illustrating an assembled structure that is formed of a bus bar frame 17e and the sensors 81 according to the embodiment 2. As illustrated in Fig. 12, the bus bar 33 is electrically connected to a terminal 240 of the energy storage device 200. A detection surface 87 of the sensor 81 is brought into contact with an upper surface of the bus bar 33. The sensor 81 is disposed in a posture where each protruding portion 85 extends along a Y-axis direction.

A sensor fixing portion 74e is mounted on the bus bar frame 17e at a position corresponding to the bus bar 33. A pair of fixing portions 752 of the sensor fixing portion 74e is disposed at positions that sandwich a bus bar opening portion 17a in the Y-axis direction. In each fixing portion 752, a shaft portion 754 penetrates a protruding portion 85 of the sensor 81, and a head portion 755 is brought into contact with an upper surface of the protruding portion 85. In such a state, as viewed in the X axis direction, a first distance H21 that is a length in a Z axis direction from the detection surface 87 of the sensor 81 to each protruding portions 85 is equal to or longer than a second distance H22 that is a length in the Z axis direction from the detection surface 87 of the sensor 81 to an oppositely facing surface 757. With such a configuration, the gap S is formed between the protruding portion 85 of the sensor 81 and the oppositely facing surface 757 of the bus bar frame 17e. Accordingly, it is possible to suppress the bus bar frame 17e from becoming an obstacle when a detection surface 87 of the sensor 81 approaches the energy storage device 200 at the time of performing assembly.

As described above, according to the energy storage apparatus of the embodiment 2, the protruding portion 85 of the sensor 81 is fixed to the bus bar frame 17e in a state where the fixing portion 752 penetrates the protruding portion 85. Accordingly, the movement of the sensor 81 in the direction orthogonal to the penetrating direction can be restricted. As a result, the detection surface 87 of the sensor 81 that is brought into contact with the bus bar 33 is less likely to be deviated from the predetermined position. Accordingly, the sensor 81 can stably detect the state of the energy storage device 200 via the bus bar 33.

In the embodiments described above, the bus bar frame 17 has been exemplified as an example of the holding member that holds the sensors 81. However, provided that a member holds the sensors 81 in a state where the detection surfaces 87 of the sensors 81 are exposed toward the energy storage devices 200, such a member other than the bus bar frame 17 can be adopted as the holding member.

In the embodiment described above, the sensor 81 having the pair of protruding portions 85 has been exemplified. However, it is sufficient that at least one protruding portion 85 is mounted on the sensor 81.

In the embodiment described above, the energy storage apparatus 1 that includes the plurality of energy storage devices 200 has been exemplified. However, the energy storage apparatus 1 may be an energy storage apparatus that includes one energy storage device.

The configurations that are formed by arbitrarily combining the respective constituent elements that the embodiments include also fall within the scope of the present invention.

### INDUSTRIAL APPLICABILITY

The present invention is applicable to an energy storage apparatus that includes energy storage devices such as lithium ion secondary batteries or the like.

### DESCRIPTION OF REFERENCE SIGNS

1: energy storage apparatus
17, 17b, 17c, 17d, 17e: bus bar frame (holding member)
74, 74e: sensor fixing portion
75: holding portion
76: wall portion
80: connection unit
81: sensor
82: sensor body
83: mounting member
84: accommodating portion
85: protruding portion
87: detection surface
200, 200a: energy storage device
751, 751d: pedestal portion
752, 752b, 752c, 752d: fixing portion
753: opening portion
754, 754b, 754c, 754d: shaft portion
755, 755b, 755c, 755d: head portion
757, 757d: oppositely facing surface
759d: hole portion
851: through hole
H1, H11, H21: first distance
H2, H22: second distance
S: gap

## Claims

1. An energy storage apparatus comprising:
an energy storage device (200);
a sensor (81) mounted on the energy storage device; and
a holding member (17) that holds the sensor in a state where a detection surface (87) of the sensor faces the energy storage device,
wherein the sensor includes a protruding portion (85) that protrudes laterally,
**characterised in that** the holding member includes:
an oppositely facing surface (757) that faces the protruding portion; and
a fixing portion (752) that is provided to the oppositely facing surface and fixes the protruding portion in a state where the fixing portion penetrates the protruding portion, and
wherein a gap (S) is formed between the protruding portion and the oppositely facing surface.

2. The energy storage apparatus according to claim 1, wherein the holding member includes a bottom surface that is brought into contact with the energy storage device, and
wherein a first distance (H1) from the detection surface of the sensor to the protruding portion is equal to or more than a second distance (H2) from the bottom surface to the oppositely facing surface.

3. The energy storage apparatus according to 1 or 2, wherein the protruding portion extends toward the holding member.

4. The energy storage apparatus according to 1 or 2, wherein the protruding portion extends along the energy storage device.

5. The energy storage apparatus according to claim 1 or 2, wherein at least a part of the fixing portion is integrally formed with the holding member by molding.

6. The energy storage apparatus according to claim 5, wherein the fixing portion includes:
a shaft portion (754) that penetrates the protruding portion; and a head portion (755) that is provided to the shaft portion and presses the protruding portion from a side opposite to the oppositely facing surface, and
wherein the shaft portion is integrally formed with the holding member by molding.

7. The energy storage apparatus according to claim 6, wherein the head portion and the shaft portion are integrally formed with the holding member by molding.

8. An energy storage apparatus comprising:
an energy storage device (200);
a bus bar (33) electrically connected to the energy storage device;
a sensor (81) mounted on the bus bar; and
a holding member (17) that holds the sensor in a state where a detection surface of the sensor faces the bus bar,
wherein the sensor includes a protruding portion (85) that protrudes laterally,
**characterised in that** the holding member includes:
an oppositely facing surface (757) that faces the protruding portion; and
a fixing portion (752) that is provided to the oppositely facing surface and fixes the protruding portion in a state where the fixing portion penetrates the protruding portion, and
wherein a gap (S) is formed between the protruding portion and the oppositely facing surface.

## Patentansprüche

1. Energiespeichermittel, umfassend:
eine Energiespeichervorrichtung (200);
einen Sensor (81), der an der Energiespeichervorrichtung montiert ist; und
ein Halteelement (17), das den Sensor in einem Zustand hält, in dem eine Detektionsfläche (87) des Sensors der Energiespeichervorrichtung zugewandt ist,
wobei der Sensor einen abstehenden Abschnitt (85) aufweist, der seitlich absteht,
**dadurch gekennzeichnet, dass** das Halteelement aufweist:
eine gegenüberliegend zugewandte Fläche (757), die dem abstehenden Abschnitt zugewandt ist; und
einen Befestigungsabschnitt (752), der an der gegenüberliegend zugewandten Fläche bereitgestellt ist und den abstehenden Abschnitt in einem Zustand fixiert, in dem der Befestigungsabschnitt den abstehenden Abschnitt durchdringt, und
wobei zwischen dem abstehenden Abschnitt und der gegenüberliegend zugewandten Fläche ein Spalt (S) gebildet ist.

2. Energiespeichermittel nach Anspruch 1, wobei das Halteelement eine Unterseite aufweist, die mit der Energiespeichervorrichtung in Kontakt gebracht wird, und
wobei eine erste Distanz (H1) von der Detektionsfläche des Sensors zu dem abstehenden Abschnitt gleich oder größer ist als eine zweite Distanz (H2) von der Unterseite zu der gegenüberliegend zugewandten Fläche.

3. Energiespeichermittel nach Anspruch 1 oder 2, wobei sich der abstehende Abschnitt in Richtung des Halteelements erstreckt.

4. Energiespeichermittel nach Anspruch 1 oder 2, wobei sich der abstehende Abschnitt entlang der Energiespeichervorrichtung erstreckt.

5. Energiespeichermittel nach Anspruch 1 oder 2, wobei mindestens ein Teil des Befestigungsabschnitts mit dem Halteelement integral durch Formen gebildet ist.

6. Energiespeichermittel nach Anspruch 5, wobei der Befestigungsabschnitt aufweist:
einen Schaftabschnitt (754), der den abstehenden Abschnitt durchdringt; und einen Kopfabschnitt (755), der an dem Schaftabschnitt bereitgestellt ist und gegen den abstehenden Abschnitt von einer Seite her drückt, die der gegenüberliegend zugewandten Fläche gegenüberliegt, und
wobei der Schaftabschnitt mit dem Halteelement integral durch Formen gebildet ist.

7. Energiespeichermittel nach Anspruch 6, wobei der Kopfabschnitt und der Schaftabschnitt mit dem Halteelement integral durch Formen gebildet sind.

8. Energiespeichermittel, umfassend:
eine Energiespeichervorrichtung (200);
eine Sammelschiene (33), die mit der Energiespeichervorrichtung elektrisch verbunden ist;
einen Sensor (81), der an der Sammelschiene montiert ist; und
ein Halteelement (17), das den Sensor in einem Zustand hält, in dem eine Detektionsfläche des Sensors der Sammelschiene zugewandt ist,
wobei der Sensor einen abstehenden Abschnitt (85) aufweist, der seitlich absteht,
**dadurch gekennzeichnet, dass** das Halteelement aufweist:
eine gegenüberliegend zugewandte Fläche (757), die dem abstehenden Abschnitt zugewandt ist; und
einen Befestigungsabschnitt (752), der an der gegenüberliegend zugewandten Fläche bereitgestellt ist und den abstehenden Abschnitt in einem Zustand fixiert, in dem der Befestigungsabschnitt den abstehenden Abschnitt durchdringt, und
wobei zwischen dem abstehenden Abschnitt und der gegenüberliegend zugewandten Fläche ein Spalt (S) gebildet ist.

## Revendications

1. Appareil de stockage d'énergie comprenant :
un dispositif de stockage d'énergie (200) ;
un capteur (81) monté sur le dispositif de stockage d'énergie ; et
un élément de maintien (17) qui maintient le capteur dans un état où une surface de détection (87) du capteur fait face au dispositif de stockage d'énergie,
dans lequel le capteur comporte une partie saillante (85) qui fait saillie latéralement,
**caractérisé en ce que** l'élément de maintien comporte :
une surface (757) orientée dans le sens opposé qui fait face à la partie saillante ; et
une partie de fixation (752) qui est prévue sur la surface orientée dans le sens opposé et fixe la partie saillante dans un état où la partie de fixation pénètre dans la partie saillante, et
dans lequel un espace (S) est formé entre la partie saillante et la surface orientée dans le sens opposé.

2. Appareil de stockage d'énergie selon la revendication 1, dans lequel l'élément de maintien comporte une surface inférieure qui est mise en contact avec le dispositif de stockage d'énergie, et
dans lequel une première distance (H1) entre la surface de détection du capteur et la partie saillante est égale ou supérieure à une seconde distance (H2) entre la surface inférieure et la surface orientée dans le sens opposé.

3. Appareil de stockage d'énergie selon 1 ou 2, dans lequel la partie saillante s'étend vers l'élément de maintien.

4. Appareil de stockage d'énergie selon 1 ou 2, dans lequel la partie saillante s'étend le long du dispositif de stockage d'énergie.

5. Appareil de stockage d'énergie selon la revendication 1 ou 2, dans lequel au moins une partie de la partie de fixation est formée d'un seul tenant avec l'élément de maintien par moulage.

6. Appareil de stockage d'énergie selon la revendication 5, dans lequel la partie de fixation comporte :
une partie tige (754) qui pénètre dans la partie saillante ; et une partie tête (755) qui est prévue sur la partie tige et presse la partie saillante depuis un côté opposé à la surface orientée dans le sens opposé, et
dans lequel la partie tige est formée d'un seul tenant avec l'élément de maintien par moulage.

7. Appareil de stockage d'énergie selon la revendication 6, dans lequel la partie tête et la partie tige sont formées d'un seul tenant avec l'élément de maintien par moulage.

8. Appareil de stockage d'énergie comprenant :
un dispositif de stockage d'énergie (200) ;
une barre omnibus (33) reliée électriquement au dispositif de stockage d'énergie ;
un capteur (81) monté sur la barre omnibus ; et
un élément de maintien (17) qui maintient le capteur dans un état où une surface de détection du capteur fait face à la barre omnibus,
dans lequel le capteur comporte une partie saillante (85) qui fait saillie latéralement,
**caractérisé en ce que** l'élément de maintien comporte :
une surface (757) orientée dans le sens opposé qui fait face à la partie saillante ; et
une partie de fixation (752) qui est prévue sur la surface orientée dans le sens opposé et fixe la partie saillante dans un état où la partie de fixation pénètre dans la partie saillante, et
dans lequel un espace (S) est formé entre la partie saillante et la surface orientée dans le sens opposé.
